Europäisches Patentamt

European Patent Office

Office européen des brevets

(19)

(11) Veröffentlichungsnummer : **0 112 936 B1**

# (12) EUROPÄISCHE PATENTSCHRIFT

(45) Veröffentlichungstag der Patentschrift :
15.03.89

(21) Anmeldenummer : 82112131.6

(22) Anmeldetag : 31.12.82

(51) Int. Cl.⁴ : **G 05 B 19/25**

(54) **Einrichtung zur linearen Bahnregelung.**

(43) Veröffentlichungstag der Anmeldung :
11.07.84 Patentblatt 84/28

(45) Bekanntmachung des Hinweises auf die Patenterteilung : 15.03.89 Patentblatt 89/11

(84) Benannte Vertragsstaaten :
AT BE CH DE FR GB IT LI LU NL SE

(56) Entgegenhaltungen :
GB--A-- 1 062 931
GB--A-- 1 203 774
US--A-- 3 262 105
US--A-- 3 430 036

(73) Patentinhaber : Square D Starkstrom GmbH
D-5277 Marienheide-Rodt (DE)

(72) Erfinder : Wiederstein, Gerd-Walter, Dipl.-Ing.
Am Hofacker 24
D-5270 Gummersbach (DE)

(74) Vertreter : Köhne, Friedrich, Dipl.-Ing.
Postfach 250265 Lothringer Strasse 81
D-5000 Köln 1 (DE)

**Beschreibung**

Die Erfindung bezieht sich auf eine Einrichtung zur linearen Bahnregelung eines bewegten Bauteiles, insbesondere eines Bauteiles einer Werkzeugmaschine, über mindestens zwei voneinander abhängige Achsen, gemäß dem Oberbegriff des Anspruchs 1. Der Ausdruck Bauteil ist hierbei ganz allgemein zu verstehen, d. h. das Bauteil kann z. B. ein Fräser oder eine Schleifscheibe oder auch ein genau zu führendes Teil eines Meßgerätes sein. Auch der Ausdruck Achsen ist allgemein zu verstehen, d. h. die Achsen können sowohl körperliche unter einem Winkel zueinander stehenden Drehachsen sein als auch Koordinatenachsen, die unter einem rechten Winkel zueinander verlaufen oder unter einem anderen Winkel zueinander stehende Achsen, über denen eine lineare Funktion gebildet werden kann.

In der Antriebstechnik tritt sehr häufig das Problem auf, zwei Achsen x und y nach der linearen Funktion :

$$S_y = M \cdot S_x \qquad \text{(Gleichung 1)}$$

zu verfahren. Dabei wird davon ausgegangen, daß die x-Achse die führende Achse und die y-Achse die geführte Achse sein soll. In der Gleichung bedeutet $S_x$ eine durch die führende Achse x vorgegebene Strecke. Ferner ist M eine reelle Konstante, die durch den auszuführenden Bewegungsvorgang vorgegeben wird. Die y-Achse ist auf Stellung so zu regeln, daß die Gleichung 1 stets eingehalten wird.

In der Praxis sind bereits einige Vorschläge gemacht worden, um mit schaltungstechnischen Maßnahmen eine solche lineare Bahnregelung zu verwirklichen. Die Vorschläge führten aber zu einem hohen schaltungstechnischen Aufwand, wobei die Relgelung selbst sehr ungenau und für die Praxis zu langsam verlief.

Eine zu Anfang erläuterte Einrichtung zur linearen Bahnregelung eines bewegten Bauteils über zwei voneinander abhängige Achsen, wobei für die Bewegung je Achse ein Antrieb vorgesehen ist, ist aus der GB-A-1 062 931 bekannt. Bei dier Einrichtung sind jedoch zwei Zähler erforderlich. Aus den Zählergebnissen dieser beiden Zähler wird durch Widerstandsnetzwerke und einem Differenzverstärker sofort ein Analogwert gebildet. Dieser Analogwert ist ein Maß für die Differenz der beiden Zählergebnisse und damit für die Regeldifferenz. Im wesentlichen geht es bei diesem Stand der Technik um Maßnahmen, um große Signalfehler zu vermeiden, die durch Überlaufen der beiden Rechner entstehen. Vor allem ist es mit dieser Einrichtung nicht möglich, die Bewegungsrichtungen bzw. Vorlauf und Rücklauf zu erkennen, so daß eine Regelung immer nur in einer Richtung erfolgen kann.

In der US-A-3 262 105 ist eine Lage-Erfassungs-System für eine Achse beschrieben. Dabei wird sehr ausführlich auf die Erzeugung von Zweiphasentakten und Nullimpuls als Weginkrementsignale eingegangen. Weiterhin wird die elektronische Verarbeitung dieser Takte in einem Vor-/Rückwärtszähler erläutert und eine mechanische Anordnung aus Schlitten und Schnecke sowie Antriebsmaschine, die mit diesem Weg-Erfassungssystem ausgerüstet ist, erläutert.

Der Erfindung liegt demgegenüber die Aufgabe zugrunde, eine Einrichtung zur linearen Bahnregelung zu schaffen, die bei geringem schaltungstechnischem Aufwand eine hohe Präzision des Regelvorgangs ermöglicht.

Die gestellte Aufgabe wird erfindungsgemäß dadurch gelöst, daß die von den Wegistwertgebern der führenden und geführten Achse gelieferten Taktsignale Vorzeicheninformationen in Form von Zweiphasentakten enthalten, daß in der Zähleinrichtung diese Taktsignale durch einen Vorzeichen-Pulsmultiplikator vorzeichenbehaftet multipliziert werden und zu einem Vor- und einem Rücktaktsignal vereinigt und von einem Vorwärts-Rückwärts-Zähler gezählt werden, und damit die Regeldifferenz vorzeichenrichtig entsprechend den Vorzeicheninformationen digital gebildet wird, so daß die Achsbewegungen von führender und geführter Achse in jeder Bewegungsrichtung korrekt erfaßt werden.

Der wesentliche Vorteil besteht darin, daß die Regeldifferenz mittels einer verhältnismäßig einfachen Hardware durch einen Zähler vorzeichenrichtig gebildet und zur Regelung der geführten Achse ausgenutzt werden kann.

Vorteilhafte Ausgestaltungen der Erfindung ergeben sich aus den Unteransprüchen.

In der Zeichnung sind Ausführungsbeispiele der Erfindung schematisch dargestellt. Es zeigen

Figur 1   ein Blockschaltbild der Regeldifferenzbildung,

Figur 2   die Darstellung von Zweiphasentakten und den hieraus aufgespaltenen Vor- und Rücktakten,

Figur 3   ein Blockschaltbild eines Einsatzbeispieles und

Figur 4 ein anderes Ausführungsbeispiel.

Wesentlich für die vorliegende Erfindung ist die Ermittlung des Regeldifferenz

$$x_{dy} = M \cdot S_x - S_y \qquad \text{(Gleichung 2)}$$

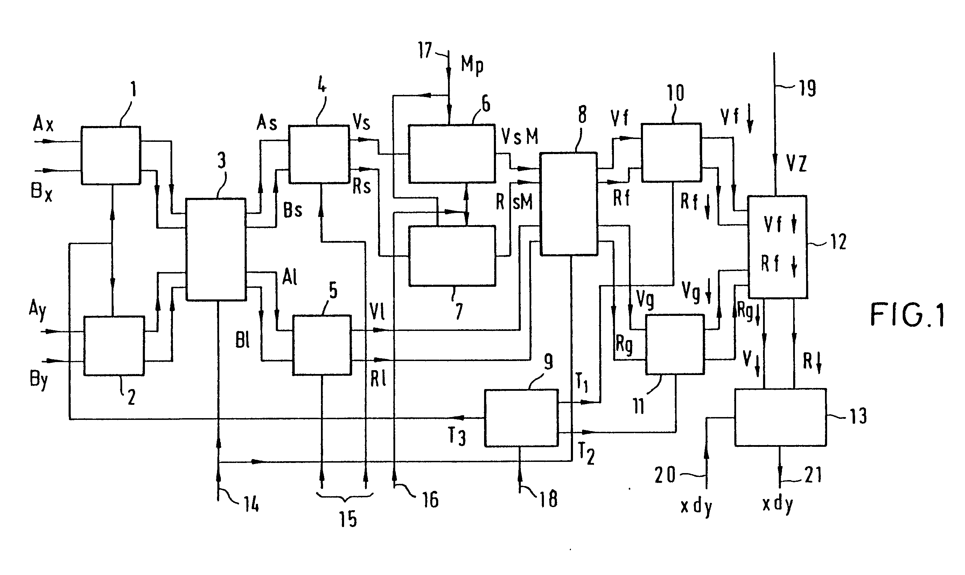

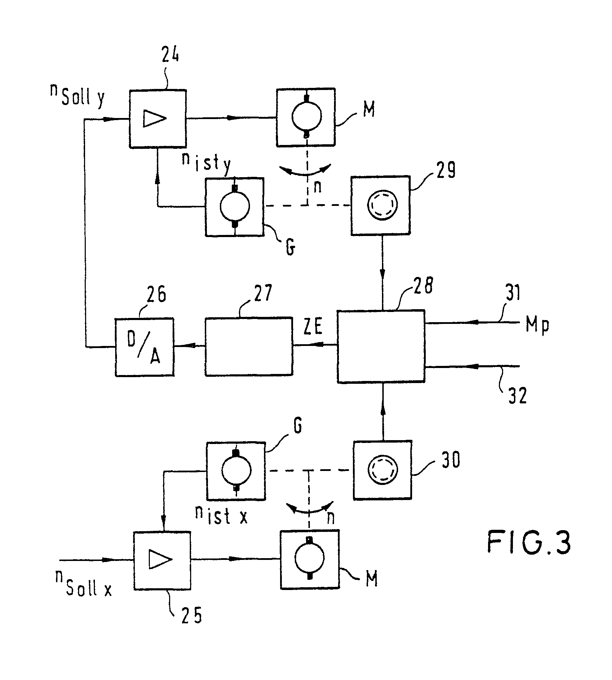

Diese ermittelte Regeldifferenz soll, wie nachfolgend anhand der Figur 1 und 3 ausführlich erläutert wird, anschließend direkt einem digitalen bzw. über einen D/A-Wandler einem analogen Stellungsregler zur Regelung der geführten y-Achse zugeführt werden. Die nachfolgend erläuterte Schaltung ist ausschließlich aus elektronischen Digitalbausteinen in TTL- und CMOS-Technik aufgebaut.

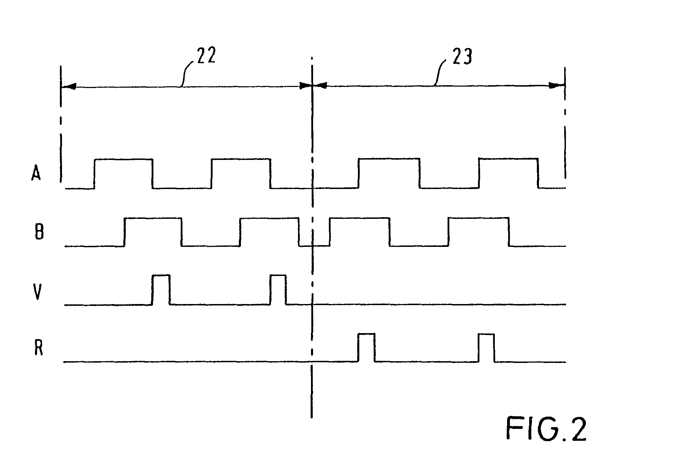

Im linken Teil der Figur 1 ersichtlich, werden der Schaltung zwei Zweiphasentakte $A_x$, $B_x$ und $A_y$, $B_y$ zugeführt. Die Art der Takte A und B ist aus der Figur 2 ersichtlich. Diese Zweiphasentakte können z. B. durch inkrementelle Wegistwertgeber geliefert werden, die mit den Achsen x und y mechanisch gekoppelt sind. Demgemäß ist je ein inkrementeller Wegistwertgeber für die x-Achse und für die y-Achse vorgesehen. Die zwei Zweiphasentakte bzw. -taktsignale Ax, Bx und Ay und By werden einer digitalen Entprellung in den Bausteinen 1 und 2 unterworfen. Die Entprellung erfolgt in den beiden Bausteinen 1, 2 mittels Schieberegister und Zusatzlogik, wobei die Entprellzeit durch die Länge der Schieberegister und durch den Schiebetakt festgelegt wird. Es gibt bereits integrierte Bausteine, die diese Funktion für beide Achsen ausführen können. Auf diese Weise werden Störimpulse, deren Dauer kleiner als die Entprellzeit ist, eliminiert. Die Entprellzeit bestimmt auch die minimale Zeit, die zwischen zwei Flanken am Ausgang der Entprellung liegt.

Die Ausgänge der Bausteine 1, 2 werden anschließend einem Baustein bzw. einer Einrichtung 3 zur Taktumschaltung schnell/langsam zugeführt. Durch Datenselektoren wird der Takt der führenden Achse bei einem Sollpulsverhältnis $M_{p1}$ der geführten zur führenden Achse kleiner als 1 in einen Baustein 4, der zur Bildung eines schnellen Vor- und Rücktaktes dient, und der Takt der geführten Achse in einen weiteren Baustein 5, der zur Bildung eines langsamen Vor- und Rücktaktes dient, geleitet. Bei einem Sollpulsverhältnis $M_{p1}$ der geführten zur führenden Achse größer als 1 wird der Takt der führenden Achse in den Baustein 5, der zur Bildung eines langsamen Vor- und Rücktaktes dient, und der Takt der geführten Achse in den Baustein 4, der zur Bildung eines schnellen Vor- und Rücktaktes dient, geleitet. Diese Umschaltung schnell/langsam erfolgt durch ein Steuersignal, welches bei 14 aufgegeben wird. Die in die Bausteine 4 und 5 aufgegebenen Takte sind mit $A_s$, $B_s$ und $A_1$, $B_1$ bezeichnet.

In den Bausteinen 4, 5 sind Monoflops enthalten, die eine Aufspaltung der einlaufenden, entprellten Zweiphasentaktsignale in Vortakte $V_s$, $V_1$ und Rücktakte $R_S$, $R_1$ bewirken. Die Art der Vor- und Rücktakte V, R ist aus Figur 2 ersichtlich.

Die langsamen Takte $V_1$, $R_1$ aus dem Baustein 5 werden direkt einem weiteren Baustein 8, welcher zur Taktumschaltung führend/geführt dient, zugeleitet. Die schnellen Takte $V_s$, $R_s$ werden, wie aus Figur 1 ersichtlich, unter Zwischenschaltung je eines programmierbaren Teilers 6, 7 ebenfalls dem Baustein 8 zugeleitet. Über Steuerleitungen 15 sind eine Pulssperre schnell und eine Pulssperre langsam angeschlossen, durch welche die schnellen Takte $V_S$, $R_s$ bzw. die langsamen Takte $V_1$, $R_1$ unterdrückt werden können.

Die programmierbaren Teiler 6, 7 bestehen aus kaskadierten Digital-Bausteinen. Dabei ist eine Bestückung mit BCD- oder Binärteilern von Vorteil. Über Leitung 17 ist an die programmierbaren Teiler 6, 7 ein Pulsmultiplikator $M_p$ angeschlossen. Die Stellenzahl des anzulegenden Pulsmultiplikators $M_p$ wird durch die geforderten Genauigkeiten festgelegt und bestimmt die Anzahl der zu kaskadierenden Bausteine. Der Pulsmultiplikator $M_p$ ist im Betrag zu übergeben. Das Vorzeichen muß getrennt der Taktumschaltung $V_f \downarrow$, $R_f \downarrow$ zugeführt werden. Der Pulsmultiplikator $M_p$ ist immer kleiner oder gleich 1. Er ist so zu bemessen, daß die obige Gleichung 1 in die nachfolgende Gleichung 3 bzw. 4 übergeht, und zwar je nach Vorzeichen des Pulsmultiplikators.

$$\left( \sum PV_y - \sum PR_y \right) = \pm \left[ M_{p1} \cdot \sum PV_x \right] \mp \left[ M_{p1} \cdot \sum PR_x \right] \qquad \text{(Gleichung 3 )}$$

$$\left[ M_{p2} \cdot \sum PV_y \right] - \left[ M_{p2} \cdot \sum PR_y \right] = \pm \left( \sum PV_x - \sum PR_x \right) \qquad \text{(Gleichung 4 )}$$

Darin bedeuten :

$\Sigma PV_{x,y}$ — Summe aller Vorpulse der x- bzw. y-Achse

$\Sigma PR_{x,y}$ — Summe aller Rückpulse der x- bzw. y-Achse

$M_{p1}$ — Pulsmultiplikator geführt/führend = Sollpulsverhältnis geführte/führende Achse (im Betrag)

$M_{p2}$ — $M_{p2} = 1/M_{p1}$

$[m]^{*)}$ — größte ganze Zahl $\leqslant$ m bzw. kleinste ganze Zahl $\geqslant$ m

Welcher der beiden Werte gültig ist, hängt von dem eingestellten Pulsmultiplikator $M_p$ und der Summe der in den Teiler einlaufenden Pulse ab. Die Teiler führen dabei eine sinnvolle Rundung durch.

Die obige Gleichung 3 wird realisiert, wenn die führende Achse die schnellere ist. Die Gleichung 4 wird realisiert, wenn die geführte Achse die schnellere ist. Entsprechend den beiden Fällen ist $M_p = M_{p1}$ bzw. $= M_{p2}$ an die programmierbaren Teiler anzulegen.

Am Ausgang der Teiler stehen die Takte $V_{SM}$ und $R_{SM}$ an. Es gilt :

$$\sum PV_{SM} = \left[ M_p \cdot \sum PV_s \right] \qquad \text{(Gleichung 5 )}$$

$$\sum PR_{SM} = \left[ M_p \cdot \sum PR_s \right] \qquad \text{(Gleichung 6 )}$$

*) m beliebig reell

Dabei ist

$\Sigma$PA — Summe aller Pulse des Taktes A

[m]* — größte ganze Zahl $\leq$ m bzw. kleinste ganze Zahl $\geq$ m welcher der beiden Werte gültig ist, hängt von dem eingestellten $M_p$ und der Summe der in den Teiler eingelaufenen Pulse ab ! Die Teiler führen dabei eine sinnvolle Rundung durch !

Mit dem Baustein 8 zur Taktumschaltung führend/geführt wirkt ein Datenselektor zusammen, der von dem Steuersignal 14 zur Umschaltung schnell/langsam angesteuert ist. Die Umschaltung erfolgt so, daß die Takte $V_{SM}$, $R_{SM}$ vom Ausgang der programmierbaren Teiler 6, 7 und die Takte $V_1$, $R_1$ vom Ausgang des Bausteines 5 derart umgeschaltet werden, daß die Takte der führenden Achse an die Ausgänge $V_f$, $R_f$ und die Takte der geführten Achse an die Ausgänge $V_g$, $R_g$ des Bausteines 8 gelangen. Der Buchstabe f bedeutet führend und der Buchstabe g bedeutet geführt.

Die Ausgänge $V_f$, $R_f$ sind mit einem Baustein 10 zur Desynchronisation und Pulserzeugung führend und die Ausgänge $V_g$, $R_g$ mit einem weiteren Baustein 11 zur Desynchronisation und Pulserzeugung geführt verbunden. Die Bausteine 10, 11 weisen flankengetriggerte D-Flipflops auf, die von phasenverschobenen Takten $T_1$, $T_2$ eines Bausteines 9 zur Takterzeugung angesteuert sind. Dadurch wird erreicht, daß Flankenwechsel an den Ausgängen der Flipflops, die verschiedenen Achsen zugeordnet sind, nicht gleichzeitig auftreten können. Ein gleichzeitiger Flankenwechsel an den D-Flipflops einer Achse wird durch die Entprellung verhindert.

Für korrektes Arbeiten müssen folgende Bedingungen eingehalten werden : Die Periodendauer des Entprelltaktes muß kleiner sein, als 1/4 der Periodendauer der einlaufenden Zweiphasentakte bei maximaler Frequenz. Die Entprellzeit muß kleiner sein als 1/2 der Periodendauer der Zweiphasentakte bei maximaler Frequenz. Die Pulsdauer der Takte $V_s$, $R_s$ und $V_1$, $R_1$ muß kleiner gleich der minimalen Entprellzeit sein. Die Periodendauer der Takte $T_1$, $T_2$ muß kleiner sein als die Pulsdauer der Takte $V_s$, $R_s$ und $V_1$, $R_1$. Die Dauer der anschließend erzeugten Pulse $V_f\downarrow$, $R_f\downarrow$ und $V_g\downarrow$, $R_g\downarrow$ muß kleiner sein als die minimale Zeit zwischen den triggernden Flanken von $T_1$ und $T_2$. Die Ausgänge der Flipflops sind mit einer Schaltung verbunden, die aus ansteigenden Flanken kurze LOW-Pulse erzeugt. So entstehen die Takte $V_f\downarrow$, $R_f\downarrow$ und $V_g\downarrow$, $R_g\downarrow$.

Die Bausteine 10, 11 zur Desynchronisation sind mit einem weiteren Baustein 12 zur Taktumschaltung verbunden, an den seinerseits ein Vorzeichen-Pulsmultiplikator VZ an der Leitung 19 angeschlossen ist und dessen Ausgänge $V\downarrow$, $R\downarrow$ an einen Vorwärts-Rückwärts-Zähler 13 angeschlossen sind, welcher die Regeldifferenz xdy ausgibt.

Ein Schaltnetz führt in Abhängigkeit des Vorzeichen-Pulsmultiplikator VZ eine Umschaltung nach der nachfolgenden Tabelle durch und erzeugt so die Signale $V\downarrow$, $R\downarrow$.

### Tabelle

| VZ | $V\downarrow$ | $R\downarrow$ | |
|----|----|----|----|
| 0 | $R_g\downarrow \wedge V_f\downarrow$ | $V_g\downarrow \wedge R_f\downarrow$ | VZ = 1   neg. Vorz. |
| 1 | $R_g\downarrow \wedge R_f\downarrow$ | $V_g\downarrow \wedge V_f\downarrow$ | VZ = 0   pos. Vorz. |

Der Vorwärts-Zähleingang ist mit $V\downarrow$ verbunden und der Rückwärts-Zähleingang mit $R\downarrow$. Damit entsteht im Zähler das Zählergebnis ZE als Binärzahl. Für die Bewertung des Ergebnisses muß man zwei Fälle a) und b) unterscheiden. Es gilt immer :

$$ZE = \sum PV\downarrow - \sum PR\downarrow \qquad \text{(Gleichung 7)}$$

bei VZ = 0 (positives Vorzeichen) gilt immer :

$$ZE|_{VZ=0} = \sum PR_g\downarrow + \sum PV_f\downarrow - \sum PV_g\downarrow - \sum PR_f\downarrow$$
$$= (\sum PR_g\downarrow - \sum PV_g\downarrow) + (\sum PV_f\downarrow - \sum PR_f\downarrow)$$
$$= (\sum PV_f\downarrow - \sum PR_f\downarrow) - (\sum PV_g\downarrow - \sum PR_g\downarrow) \qquad \text{(Gleichung 8)}$$

bei VZ = 1 (negatives Vorzeichen) gilt immer :

$$ZE|_{VZ=1} = \sum PR_g\downarrow + \sum PR_f\downarrow - \sum PV_g\downarrow - \sum PV_f\downarrow$$
$$= (\sum PR_f\downarrow - \sum PV_f\downarrow) - (\sum PV_g\downarrow - \sum PR_g\downarrow) \qquad \text{(Gleichung 9)}$$

Nun hat man zwei Fälle zu unterscheiden !

Fall a)

Ist die führende Achse schneller, wo wird aus Gleichung 8 und Gleichung 9 mit Gleichung 5 und Gleichung 6 :

$$ZE_a\big|_{VZ=0} = \left([M_{p1} \cdot \sum PV_x] - [M_{p1} \cdot \sum PR_x]\right) - \left(\sum PV_y - \sum PR_y\right) \qquad \text{(Gleichung 10)}$$

$$ZE_a\big|_{VZ=1} = \left([M_{p1} \cdot \sum PR_x] - [M_{p1} \cdot \sum PV_x]\right) - \left(\sum PV_y - \sum PR_y\right) \qquad \text{(Gleichung 11)}$$

wobei im Fall a)
$V_x = V_s$ ; $R_x = R_s$
$V_y = V_1$ ; $R_y = R_1$ ist.

Aus den Gleichungen 10 und 11 erkennt man, daß im Zähler näherungsweise die Regeldifferenz in Pulsen vorzeichenrichtig vorliegt. Wie genau das Zählergebnis mit der realen Regeldifferenz übereinstimmt, zeigt die folgende Betrachtung. Ohne den Rundungsfehler der beiden Teiler würde die Sollwertvorgabe auf ± 1 Puls genau erfolgen. Nimmt man für jeden der beiden Teiler eine maximalen Rundungsfehler von ± 1 an, welcher in Wirklichkeit kleiner ist, so folgt daraus, daß die Sollwertvorgabe auf ± 3 Pulse genau erfolgt. Die Istwertbildung erfolgt auf ± 1 Puls genau. Damit gilt :

$$(ZE_a - 4) \leq x_{dyp} \leq (ZE_a + a) \qquad \text{(Gleichung A)}$$

Aus Gleichung A folgt, daß im Fall a) die geführte Achse mit einem digitalen Regler auf ± 4 Pulse genau positioniert werden kann.

Fall b)

Ist die geführte Achse schneller, so wird aus Gleichung 8 und Gleichung 9 mit Gleichung 5 und Gleichung 6 :

$$ZE_b\big|_{VZ=0} = \left(\sum PV_x - \sum PR_x\right) - \left([M_{p2} \cdot \sum PV_y] - [M_{p2} \cdot \sum PR_y]\right) \qquad \text{(Gleichung 12)}$$

$$ZE_b\big|_{VZ=1} = \left(\sum PR_x - \sum PV_x\right) - \left([M_{p2} \cdot \sum PV_y] - [M_{p2} \cdot \sum PR_y]\right) \qquad \text{(Gleichung 13)}$$

wobei im Fall b)
$V_x = V_1$ ; $R_x = R_1$
$V_y = V_s$ ; $R_y = R_s$ ist.

Mit Gleichung 12 und Gleichung 13 ersieht man, daß in diesem Fall das Zählergebnis nicht näherungsweise die Regeldifferenz in Pulsen ist.
Mit einer Betrachtung ähnlich im Fall a) findet man vielmehr :

$$(\lfloor ZE_b \cdot M_{p1}\rfloor * - 4\lceil M_{p1}\rceil *) \leq x_{dyp} \leq (\lceil ZE_b \cdot M_{p1}\rceil + 4\lceil M_{p1}\rceil) \qquad \text{(Gleichung B)}$$

Dies bedeutet, daß im Fall b) nur auf ± 4 $\lceil M_{p1}\rceil$ Pulse genau positioniert werden kann, wobei $M_{p1} > 1$ ist !
Daß im Fall b) die Pulse der geführten Achse unterteilt werden, bedeutet weiter eine Veränderung der Regelstrecke der y-Achse. Dies ist beim Reglerentwurf zu beachten. Den Fall b) kann man umgehen, indem man die Pulse der führenden Achse bei $M_{p1} > 1$ geeignet vervielfacht und so ein neues $M_{p1} < 1$ erhält. Dann hat man die Bedingungen für Fall a) geschaffen.
Wie aus dem obigen hervorgeht, steht am Ausgang 21 des Zählers 13 die Regeldifferenz xdy an. Die Rückmeldung Clear xdy erfolgt über Leitung 20. Der Vollständigkeit halber sei noch gesagt, daß an die Leitung 16 ein Clear-Teiler angeschlossen und bei 18 der Eingangstakt aufgegeben wird. In Figur 2 bedeutet der Pfeil 22 « Vorwärts » und der Pfeil 23 « Rückwärts ».
Figur 3 veranschaulicht noch ein Einsatzbeispiel. Hier wird an zwei Gleichstromantrieben M eine lineare Bahnregelung vorgenommen. Zu diesem Zweck sind zwei Inkrementalgeber 29, 30 vorgesehen, welche $S_x$- und $S_y$-Pulse der Einrichtung 28 zur Regeldifferenzbildung zuführen. Diese Einrichtung erzeugt aus diesen Pulsen mit dem an Leitung 31 angelegten Pulsmultiplikator $M_p$ Zählergebnisse, welche einem digitalen Stellungsregler 27 zugeführt werden. Dieser erzeugt y-Drehzahlsollwerte $n_{soll\,y}$.

*) [m] — größte ganze Zahl $\leq$ m
  $\lceil m \rceil$ — kleinste ganze Zahl $\geq$ m

Diese y-Drehzahlsollwerte werden sodann über einen D/A-Wandler 26 einem analogen y-Drehzahlregler 24 zugeführt. Die x-Drehzahlsollwerte $n_{soll\,x}$ der führenden Achse werden direkt einem analogen x-Drehzahlregler 25 der führenden Achse zugeleitet, so daß die x-Drehzahlsollwerte $n_{soll\,x}$ die Drehzahlen der beiden Gleichstromantriebe M bestimmen. Die Zählergebnisse entsprechen den oben erläuterten Gleichungen 10 bis 13. Figur 3 verdeutlicht noch, daß den Drehzahlreglern 24 und 25 je ein Tachogenerator G vorgeschaltet ist. Es sei noch bemerkt, daß über die Leitung 32, wie oben beschrieben, Steuersignale eingeleitet werden.

Die Erfindung beschränkt sich nicht auf die oben erläuterten Ausführungsbeispiele, vielmehr können auch gewisse Abänderungen je nach Anwendungsgebiet vorgenommen werden. Die Erfindung kann überall dort Verwendung finden, wo eine lineare Bahnregelung mit zwei Achsen erfolgen soll, d. h. wo ein Differential benötigt wird. Anwendungsgebiete sind z. B. die Verzahntechnik, die Schleiftechnik oder die Zahnradmeßtechnik. Daneben kann die Erfindung aber auch bei linearen Bahnreglungen in der Meßtechnik Anwendung finden, um Korrekturwerte bereitzustellen. Dies ist beispielsweise der Fall, wenn zu Meßzwecken zwei Achsen hochgenau eine Geradenfunktion abfahren müssen und dies mit den bisherigen regelungstechnischen Mitteln nicht genügend genau möglich ist. Es kann dann durch Verwendung der Erfindung ein Korrekturwert ermittelt werden, der mit dem Meßwert verrechnet werden kann.

Schließlich ist die Erfindung auch zur Regelung mehrerer Achsen in Abhängigkeit von einer Achse und zur Regelung einer Achse in Abhängigkeit von mehreren Achsen anwendbar.

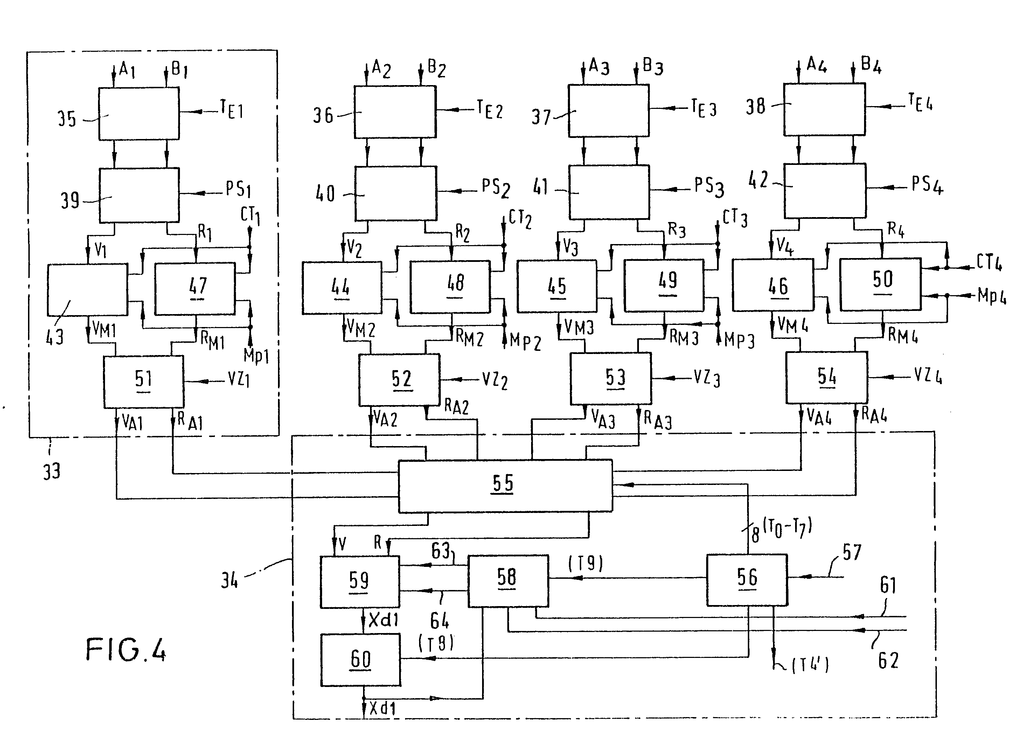

Figur 4 zeigt ein anderes Ausführungsbeispiel der erfindungsgemäßen Einrichtung, und zwar ein Blockschaltbild zur linearen Bahnregelung einer Achse in Abhängigkeit von einer bis zu drei Achsen. Das Blockschaltbild besteht im wesentlichen aus vier gleichartig aufgebauten nebeneinander gezeichneten Einrichtungen zur Taktmultiplikation, von welchen die eine Einrichtung 33 für die erste Achse der Deutlichkeit halber von einer strichpunktierten Linie umgeben ist. An die vier Einrichtungen zur Taktmultiplikation ist eine gemeinsame Einrichtung 34, die wiederum von einer strichpunktierten Linie eingefaßt ist, zur Summenbildung bzw. zur Ermittlung und Ausgabe der Regeldifferenz $X_{d1}$ angeschlossen.

Je Achse der nach Figur 4 möglichen insgesamt vier Achsen sind inkrementelle Wegistwertgeber vorgesehen, welche Zweiphasentakte A 1, B 1, A 2, B 2, A 3, B 3, A 4, B 4 liefern, welche, wie oben auch zu Figur 1 beschrieben wurde, mittels Schieberegister und Zusatzlogik in Bausteinen 35 bis 38 digital entprellt werden. Den Bausteinen werden Entprelltakte $T_{E1}$, $T_{E2}$, $T_{E3}$ und $T_{E4}$ zugeführt. Die entprellten Takte werden anschließend mittels nachgeschalteter Bausteine 39 bis 42 in Vortakte $V_1$ bis $V_4$ und Rücktakte $R_1$ bis $R_4$ aufgespalten. Hieran sind Pulssperren $PS_1$, $PS_2$, $PS_3$, $PS_4$ angeschlossen. Diese Vortakte $V_1$ bis $V_4$ und Rücktakte $R_1$ bis $R_4$ werden sodann programmierbaren Teilern 43 bis 46 bzw. 47 bis 50 zugeführt und mit Pulsmultiplikatoren $M_{p1}$ bis $M_{p4}$ multipliziert. Die so gebildeten unterteilten Takte $V_{M1}$ bis $V_{M4}$ bzw. $R_{M1}$ bis $R_{M4}$ werden je einem Baustein 51 bis 54 zur Vorzeichenumschaltung zugeleitet.

Die Umschaltung wird wie folgt vorgenommen :

— Vorzeichen Pulsmultiplikator $VZ_x = 0$

$$V_{Ax} = V_{Mx}$$

$$R_{Ax} = R_{Mx}$$

— Vorzeichen Pulsmultiplikator $VZ_x = 1$ :

$$V_{Ax} = R_{Mx}$$

$$R_{Ax} = V_{Mx}$$

Die Pulse $V_{Ax}$, $R_{Ax}$ sind somit die mit $M_{px}$ multiplizierten, vorzeichenbehafteten Takte $V_x$, $R_x$. An die Bausteine 51 bis 54 sind Vorzeichen Pulsmultiplikatoren $VZ_1$ bis $VZ_4$ und an die Bausteine 43 bis 50 Clear-Teiler $CT_1$ bis $CT_4$ angeschlossen.

Die Vorpulse $V_{A1}$ bis $V_{A4}$ und Rückpulse $R_{A1}$ bis $R_{A4}$ ausgangs der Bauteile 51 bis 54 werden einer gemeinsamen Einrichtung 34 zur Summenbildung bzw. Regeldifferenzbildung aufgegeben. Die Einrichtung 34 weist einen gemeinsamen Baustein 55 zur Desynchronisation und Pulserzeugung auf, welcher die einlaufenden Takte bzw. Pulse $V_{A1}$ bis $V_{A4}$ bzw. $R_{A1}$ bis $R_{A4}$ durch acht phasenverschobene Takte $T_0$ bis $T_7$ abtastet und zu einem Vortakt V und zu einem Rücktakt R vereinigt. Die Vortakte V und Rücktakte R werden einem Vor-Rück-Zähler 59 aufgegeben, der zusätzlich über Lade- und Wert-Eingänge 63, 64 verfügt. Der Zähler 59 wirkt ferner mit einem Baustein 58 zu Offset-Addition sowie einem Baustein 56 zur Takterzeugung zusammen. Mit Bezugszeichen 57 ist ein Zugang für Eingangstakte, mit Bezugszeichen 61 und 62 Zugänge für Offset und Laden und schließlich mit dem Bezugszeichen 60 ein Speicher bezeichnet.

Im Zähler 59 wird, ohne Betrachtung der Offset-Addition die Summe

EP 0 112 936 B1

$$S = \pm \left( [M_{p1} \sum PV_1] - [M_{p1} \sum PR_1] \right) \quad \pm \qquad \text{(Gleichung 14)}$$

$$\pm \left( [M_{p2} \sum PV_2] - [M_{p2} \sum PR_2] \right) \quad \pm \qquad \text{(Gleichung 14)}$$

$$\pm \left( [M_{p3} \sum PV_3] - [M_{p3} \sum PR_3] \right) \quad \pm \qquad \text{(Gleichung 14)}$$

$$\pm \left( [M_{p4} \sum PV_4] - [M_{p4} \sum PR_4] \right) \qquad \text{(Gleichung 14)}$$

gebildet.

In dieser Gleichung bedeuten :

$PV_1$, $PV_2$, $PV_3$, $PV_4$ : Vorpulse von den vier Achsen
$PR_1$, $PR_2$, $PR_3$, $PR_4$ : Rückpulse von den vier Achsen
$[m]$ : größte ganze Zahl $\leq m$ bzw. kleinste ganze Zahl $\geq m$
$M_{p1}$, $M_{p2}$, $M_{p3}$, $M_{p4}$ : Pulsmultiplikatoren.

Die Takterzeugung liefert 10 phasenverschobene, zeitlich aufeinanderfolgende Takte $T_0 - T_9$ und einen Regeltakt $T_4$, der einem nachgeschalteten digitalen Regler als Abtasttakt dienen kann.

Mit der Offset-Addition ist es möglich, zu dem Zählerergebnis des Zählers ohne Pulsverlust einen Offset zu addieren und so eine relative Stellungsregelung am geführten Antrieb durchzuführen. Das Laden des Additionsergebnisses erfolgt mit dem Takt $T_9$.

Mit der im Blockschaltbild angegebenen Einrichtung ist es möglich, eine Achse in Abhängigkeit von den drei weiteren Achsen nach den Gleichungen)

$$S_1 = M_2 S_2 \qquad \text{(Gleichung 15)}$$
$$S_1 = M_2 S_2 + M_3 S_3 \qquad \text{(Gleichung 16)}$$
$$S_1 = M_2 S_2 + M_3 S_3 + M_4 S_4 \qquad \text{(Gleichung 17)}$$

zu verfahren.

Dabei sind $S_2$, $S_3$, $S_4$ durch die drei letzten Achsen vorgegebene Strecken. $M_2$, $M_3$, $M_4$ sind reelle Konstanten, die durch den auszuführenden Bewegungsvorgang vorgegeben sind.

Im Zähler wird eine Regeldifferenz $x_{d1}$ nach Gleichung 14 ermittelt, wobei die $M_{px} \leq 1$ so gewählt werden, daß eine der Gleichungen 15, 16 oder 17 verwirklicht wird. Diese Regeldifferenz $x_{d1}$ kann direkt einem digitalen Stellungsregler für die betreffende Achse übergeben werden.

**Patentansprüche**

1. Einrichtung zur linearen Bahnregelung eines bewegten Bauteiles, insbesondere eines Bauteiles einer Werkzeugmaschine, über mindestens zwei voneinander abhängige Achsen, wobei für die Bewegung einer führenden Achse ein führender Antrieb (25, G, M) und für die Bewegung einer geführten Achse ein geführter Antrieb (24, G, M) vorgesehen sind, und ein Sollwert für die Lage der geführten Achse in linearer Abhängigkeit von der Lage der führenden Achse mittels eines mechanisch mit der führenden Achse gekuppelten Wegistwertgebers (30) sowie ein Istwert für die Lage der geführten Achse mittels eines mechanisch mit der geführten Achse gekuppelten Wegistwertgebers (29) ermittelt und ausschließlich die geführte Achse in ihrer Lage geregelt wird, wobei ferner aus von den Wegistwertgebern (29, 30) gelieferten Taktsignalen (Sx, Sy) mittels einer Zähleinrichtung (28) eine Regeldifferenz gebildet und diese Regeldifferenz einem Stellungsregler (27) zur Regelung des geführten Antriebs (24, G, M) in Abhängigkeit von dem führenden Antrieb (25, G, M) zugeführt wird, dadurch gekennzeichnet, daß die von den Wegistwertgebern (29, 30) der führenden und geführten Achse gelieferten Taktsignale (Sx, Sy) Vorzeicheninformationen in Form von Zweiphasentakten (Ax, Bx ; Ay, By) enthalten, daß in der Zähleinrichtung (28) diese Taktsignale durch einen Vorzeichen-Pulsmultiplikator (19, VZ) vorzeichenbehaftet multipliziert werden und zu einem Vor- und einem Rücktaktsignal vereinigt und von einem Vorwärts-Rückwärts-Zähler (13) gezählt werden, und damit die Regeldifferenz (xdy) vorzeichenrichtig entsprechend den Vorzeicheninformationen digital gebildet wird, so daß die Achsbewegungen von führender und geführter Achse in jeder Bewegungsrichtung korrekt erfaßt werden.

2. Einrichtung nach Anspruch 1, dadurch gekennzeichnet, daß die von den Wegistwertgebern (29, 30) gelieferten Zweiphasentaktsignale (Ax, Bx ; Ay, By) einer digitalen Entprellung (1, 2) mittels Schieberegister und Zusatzlogik unterworfen sind.

3. Einrichtung nach Anspruch 2, dadurch gekennzeichnet, daß eine Einrichtung (3) zur Taktumschaltung schnell/langsam vorgesehen ist, derart, daß durch Datenselektoren bei einem Sollpulsverhältnis ($M_{p1}$) der geführten zur führenden Achse kleiner als 1 der Takt der führenden Achse in einen Baustein (4) zur Bildung eines schnellen Vor- und Rücktaktes und der Takt der geführten Achse in einen weiteren Baustein (5) zur Bildung eines langsamen Vor- und Rücktaktes geleitet ist, und daß bei einem Sollpulsverhältnis ($M_{p1}$) der geführten zur führenden Achse größer als 1 der Takt der führenden Achse in

# EP 0 112 936 B1

den Baustein (5) zur Bildung eines langsamen Vor- und Rücktaktes und der Takt der geführten Achse in den Baustein (4) zur Bildung eines schnellen Vor- und Rücktaktes geleitet ist, und daß diese Umschaltung durch ein Steuersignal (14) erfolgt.

4. Einrichtung nach Anspruch 3, dadurch gekennzeichnet, daß in den Bausteinen (4, 5) Monoflops zum Aufspalten der einlaufenden, entprellten Zweiphasentaktsignale in Vortakte ($V_s$, $V_1$) und Rücktakte ($R_s$, $R_1$) enthalten sind.

5. Einrichtung nach Anspruch 4, dadurch gekennzeichnet, daß die langsamen Takte ($V_1$, $R_1$) direkt einem Baustein (8) zur Taktumschaltung führend/geführt zugeleitet sind, und daß die schnellen Takte ($V_s$, $R_s$) unter Zwischenschaltung je eines programmierbaren Teilers (6, 7) dem Baustein (8) zugeleitet sind.

6. Einrichtung nach Anspruch 5, dadurch gekennzeichnet, daß über Steuerleitungen (15) eine Pulssperre schnell und eine Pulssperre langsam zur Unterdrückung der schnellen Takte ($V_s$, $R_s$) bzw., der langsamen Takte ($V_1$, $R_1$) angeschlossen sind.

7. Einrichtung nach Anspruch 5 oder 6, dadurch gekennzeichnet, daß die programmierbaren Teiler (6, 7) aus kaskadierten Digital-Bausteinen bestehen, und daß an die programmierbaren Teiler (6, 7) ein Pulsmultiplikator (17, $M_p$) angeschlossen ist.

8. Einrichtung nach einem der Ansprüche 5 bis 7, dadurch gekennzeichnet, daß mit dem Baustein (8) zur Taktumschaltung führend/geführt ein Datenselektor zusammenwirkt, der von dem Steuersignal (14) zur Umschaltung schnell/langsam angesteuert ist, so daß die Takte ($V_{SM}$, $R_{SM}$) von Ausgang der programmierbaren Teiler (6, 7) und die Takte ($V_1$, $R_1$) vom Ausgang des Bausteines (5) derart umgeschaltet werden, daß die Takte der führenden Achse an die Ausgänge ($V_f$, $R_f$) und die Takte der geführten Achse an die Ausgänge ($V_g$, $R_g$) des Bausteines (8) gelangen.

9. Einrichtung nach Anspruch 8, dadurch gekennzeichnet, daß die Ausgänge ($V_f$, $R_f$) mit einem Baustein (10) zur Desynchronisation und Pulserzeugung führend und die Ausgänge ($V_g$, $R_g$) mit einem Baustein (11) zur Desynchronisation und Pulserzeugung geführt verbunden sind, daß die Bausteine (10, 11) flankengetriggerte D-Flipflops aufweisen, die von phasenverschobenen Takten ($T_1$, $T_2$) eines Bausteines (9) zur Takterzeugung angesteuert sind.

10. Einrichtung nach Anspruch 9, dadurch gekennzeichnet, daß die Bausteine (10, 11) zur Desynchronisation mit einem weiteren Baustein (12) zur Taktumschaltung verbunden sind, an den seinerseits der Vorzeichen-Pulsmultiplikator (19, VZ) angeschlossen ist.

11. Einrichtung nach einem der vorhergehenden Ansprüche, dadurch gekennzeichnet, daß die Zählergebnisse einem digitalen Stellungsregler (27) zuführbar sind, der seinerseits y-Drehzahlsollwerte ($n_{soll\,y}$) erzeugt, daß diese y-Drehzahlsollwerte über einen D/A-Wandler (26) einem analogen y-Drehzahlregler (24) zuführbar sind, und daß die x-Drehzahlsollwerte ($n_{soll\,x}$) der führenden Achse direkt einem analogen x-Drehzahlregler (25) der führenden Achse zugeleitet werden, so daß die x-Drehzahlsollwerte ($n_{soll\,x}$) die Drehzahlen zweier Gleichstromantriebe (M) bestimmen.

12. Einrichtung nach Anspruch 1, dadurch gekennzeichnet, daß zur linearen Bahnregelung einer Achse in Abhängigkeit von einer bis zu drei Achsen je Achse inkrementelle Wegistwertgeber vorgesehen sind, welche Zweiphasentakte (A 1, B 1, A 2, B 2, A 3, B 3, A 4, B 4) liefern, die mittels Schieberegister und Zusatzlogik in Bausteinen (35 bis 38) digital entprellt werden, daß die entprellten Takte mittels nachgeschalteter Bausteine (39 bis 42) in Vortakte ($V_1$ bis $V_4$) und Rücktakte ($R_1$ bis $R_4$) aufgespalten und programmierbaren Teilern (43 bis 46 bzw. 47 bis 50) zugeführt und mit Pulsmultiplikatoren ($M_{p1}$ bis $M_{p4}$) multipliziert werden, daß die so gebildeten unterteilten Takte ($V_{M1}$ bis $V_{M4}$ bzw. $R_{M1}$ bis $R_{M4}$) je einem Baustein (51 bis 54) zur Vorzeichenumschaltung zugeleitet werden, und daß die Vorpulse ($V_{A1}$ bis $V_{A4}$) und Rückpulse ($R_{A1}$ bis $R_{A4}$) einer gemeinsamen Einrichtung (34) zur Summenbildung bzw. Regeldifferenzbildung aufgegeben werden.

13. Einrichtung nach Anspruch 12, dadurch gekennzeichnet, daß die Einrichtung (34) einen Baustein (55) zur Desynchronisation und Pulserzeugung aufweist, welcher die einlaufenden Takte (Pulse) ($V_{A1}$ bis $V_{A4}$ bzw. $R_{A1}$ bis $R_{A4}$) durch phasenverschobene Takte ($T_0$ bis $T_7$) abtastet und zu einem Vortakt (V) und einem Rücktakt (R) vereinigt, die ihrerseits einem Vor-Rück-Zähler (59) aufgegeben werden, daß der Zähler (59) mit einem Baustein (58) zur Offset-Addition sowie einem Baustein (56) zur Takterzeugung zusammenwirkt, und daß die im Zähler (59) ermittelte Regeldifferenz ($X_{d1}$) einem digitalen Stellungsregler zugeleitet wird.

## Claims

1. Device for the linear path regulation of a moving component, in particular of a component of a machine tool, by way of at least two axes dependent on each other, whereby for the movement of a guiding axis a guiding drive (25, G, M) and for the movement of a guided axis a guided drive (24, G, M) are provided and a reference value for the position of the guided axis is ascertained in linear dependence on the position of the guiding axis by means of a displacement actual value pick-up (30) mechanically connected to the guiding axis and an actual value for the position of the guided axis is ascertained by means of a displacement actual value pick-up (29) mechanically connected to the guided axis and exclusively the guided axis is regulated in its position, whereby furthermore from timing signals (Sx, Sy) supplied by the displacement actual value pick-ups (29, 30), a control difference is formed by means of a

8

counting device (28) and this control difference is supplied to a position regulator (27) for regulating the guided drive (24, G, M) depending on the guiding drive (25, G, M), characterised in that the timing signals (Sx, Sy) supplied by the displacement actual value pick-ups (29, 30) of the guiding and guided axis contain sign information in the form of two-phase timing pulses (Ax, Bx ; Ay, By), that in the counting device (28) these timing signals are multiplied subject to a sign by a sign-pulse multiplier (19, VZ) and are combined as a forward and backward timing signal and are counted by a forward/backward counter (13) and thus the control difference (xdy) is formed digitally with the correct sign according to the sign information, so that the axial movements of guiding and guided axis are ascertained correctly in each direction of movement.

2. Device according to Claim 1, characterised in that the two-phase timing signals (Ax, Bx ; Ay, By) supplied by the displacement actual value pick-ups (29, 30) are subject to digital de-bouncing (1, 2) by means of shift registers and additional logic.

3. Device according to Claim 2, characterised in that a device (3) for rapid/slow timing pulse switching is provided such that by data selectors, with a reference pulse ratio ($M_{p1}$) of the guided to the guiding axis less than 1, the timing pulse of the guiding axis is directed into a component (4) for forming a rapid forward and backward timing pulse and the timing pulse of the guided axis is directed into a further component (5) for forming a slow forward and backward timing pulse and that with a reference pulse ratio ($M_{p1}$) of the guided to the guiding axis greater than 1, the timing pulse of the guiding axis is directed into the component (5) for forming a slow forward and backward timing pulse and the timing pulse of the guided axis is directed into the component (4) for forming a rapid forward and backward timing pulse and that this switching is carried out by a control signal (14).

4. Device according to Claim 3, characterised in that monoflops for splitting the incoming, de-bounced two-phase timing signals into forward timing pulses ($V_s$, $V_1$) and backward timing pulses ($R_s$, $R_1$) are contained in the components (4, 5).

5. Device according to Claim 4, characterised in that the slow timing pulses ($V_1$, $R_1$) are sent in a guiding/guided manner directly to a component (8) for timing pulse switching and that the rapid timing pulses ($V_s$, $R_s$) are sent to the component (8) respectively with the interposition of a programable divider (6, 7).

6. Device according to Claim 5, characterised in that by way of control leads (15), a rapid pulse block and a slow pulse block are connected for the suppression of rapid timing pulses ($V_s$, $R_s$) or slow timing pulses ($V_1$, $R_1$).

7. Device according to Claim 5 or 6, characterised in that the programable dividers (6, 7) consist of cascaded digital components and that a pulse multiplier (17, $M_p$) is connected to the programable dividers (6, 7).

8. Device according to one of Claims 5 to 7, characterised in that a data selector co-operates with the component (8) for guiding/guided timing pulse switching, which selector is controlled by the control signal (14) for rapid/slow switching, so that the timing pulses ($V_{sM}$, $R_{sM}$) from the output of the programable divider (6, 7) and the timing pulses ($V_1$, $R_1$) from the output of the component (5) are switched so that the timing pulses of the guiding axis pass to the outputs ($V_f$, $R_f$) and the timing pulses of the guided axis pass to the outputs ($V_g$, $R_g$) of the component (8).

9. Device according to Claim 8, characterised in that the outputs ($V_f$, $R_f$) are connected in a guiding manner to a component (10) for desynchronisation and pulse production and the outputs ($V_g$, $R_g$) are connected in a guided manner to a component (11) for desynchronisation and pulse production, that the components (10, 11) have edge-triggered D-flipflops, which are controlled by phase-shifted timing pulses ($T_1$, $T_2$) of a component (9) for timing pulse production.

10. Device according to Claim 9, characterised in that the components (10, 11) for desynchronisation are connected to a further component (12) for timing pulse switching, to which the sign-pulse multiplier (19, VZ) is in turn connected.

11. Device according to one of the preceding Claims, characterised in that the counting results can be supplied to a digital position regulator (27), which in turn produces y-rotational speed reference values ($n_{ref\,y}$), that these y-rotational speed reference values can be supplied by way of a D/A-converter (26) to an analog y-rotational speed regulator (24) and that the x-rotational speed reference values ($n_{ref\,x}$) of the guiding axis are sent directly to an analog x-rotational speed regulator (25) of the guiding axis, so that the x-rotational speed reference values ($n_{ref\,x}$) determine the rotational speeds of two dc drives (M).

12. Device according to Claim 1, characterised in that for the linear path regulation of an axis depending on one to three axes incremental displacement actual value pick-ups are provided per axis, which supply two-phase timing pulses (A1, B1, A2, B2, A3, B3, A4, B4), which are de-bounced digitally by means of shift registers and additional logic in components (35 to 38), that the de-bounced timing pulses are split up by means of subsequent components (39 to 42) into forward timing pulses ($V_1$ to $V_4$) and backward timing pulses ($R_1$ to $R_4$) and supplied to programable dividers (43 to 46 or 47 to 50) and multiplied by pulse multipliers ($M_{p1}$ to $M_{p4}$), that the divided timing pulses ($V_{M1}$ to $V_{M4}$ or $R_{M1}$ to $R_{M4}$) formed in this way are supplied respectively to a component (51 to 54) for sign switching and that the forward pulses ($V_{A1}$ to $V_{A4}$) and backward pulses ($R_{A1}$ to $R_{A4}$) are sent to a common device (34) for forming a total or for forming a control difference.

13. Device according to Claim 12, characterised in that the device (34) comprises a component (55) for desynchronisation and pulse-production, which scans the incoming timing pulses (pulses) ($V_{A1}$ to $V_{A4}$ or $R_{A1}$ to $R_{A4}$) by phase shifted timing pulses ($T_0$ to $T_7$) and combines them to form a forward timing pulse (V) and a backward timing pulse (R), which are in turn supplied to a forward/backward counter (59), that the counter (59) co-operates with a component (58) for offset addition and a component (56) for timing pulse production and that the control difference ($X_{d1}$) ascertained in the counter (59) is supplied to a digital position regulator.

**Revendications**

1. Dispositif de régulation linéaire de déplacement d'un composant mobile, notamment un composant d'une machine-outil, par l'intermédiaire d'au moins deux axes dépendant l'un de l'autre, où il est prévu pour le mouvement d'un axe de guidage un entraînement de guidage (25, G, M) et pour le mouvement d'un axe guidé en entraînement guidé (24, G, M), et on obtient une valeur de consigne pour la position de ld'axe guidé en relation linéaire avec la position de l'axe de guidage au moyen d'un capteur de valeur réelle de distance (30) qui est accouplé avec l'axe de guidage, ainsi qu'une valeur réelle de la position de l'axe guidé au moyen d'un capteur de valeur réelle de distance (29) qui est accouplé mécaniquement avec l'axe guidé, et exclusivement l'axe guidé est réglé en position, tandis qu'en outre, à partir des signaux de cadences ($S_x$, $S_y$) fournis par les capteurs de valeurs réelles de distances (29, 30), une différence de régulation est établie au moyen d'un dispositif de comptage (28) et cette différence de régulation est appliquée à un régulateur de position (27) en vue de la régulation de l'entraînement guidé (24, G, M) en fonction de l'entraînement de guidage (25, G, M), caractérisé en ce que les signaux de cadences ($s_x$, $s_y$) fournis par les capteurs de valeurs réelles de distances (29, 30) de l'axe de guidage et de l'axe guidé contiennent des informations de signes sous la forme de cadences biphasées ($A_x$, $B_y$ ; $A_y$, $B_y$), en ce que, dans le dispositif de comptage (28), des signaux de cadences sont multipliés, en tenant compte des signes, par un multiplicateur d'impulsions de signe (19, 82) et sont combinés sous la forme d'un signal de cadence d'avance et d'un signal de cadence de recul et sont comptés par un compteur progressif-régressif (13), et ainsi la différence de régulation (xdy) est établie numériquement avec le signe correct en correspondance aux informations de signes de telle sorte que les mouvements de l'axe de guidage et de l'axe guidé soient captés correctement dans chaque direction de mouvement.

2. Dispositif selon la revendication 1, caractérisé en ce que les signaux de cadences biphasées (Ax, Bx ; Ay, By) fournis par les capteurs de valeur réelle de distance (29, 30) sont soumis à une conversion numérique (1, 2) au moyen de registres à décalage et d'une logique additionnelle.

3. Dispositif selon la revendication 2, caractérisé en ce qu'il est prévu un dispositif (3) pour une conversion de cadence entre un état rapide et un état lent, de telle sorte que, au moyen de sélecteurs de données, lorsque le rapport ($M_{p1}$) entre les impulsions de consigne de l'axe guidé et de l'axe de guidage est inférieur à 1, la cadence de l'axe de guidage soit appliquée à un composant (4) d'établissement d'une cadence d'avance et d'une cadence de recul rapides tandis que la cadence de l'axe guidé est appliquée à un autre composant (5) d'établissement d'une cadence d'avance et d'une cadence de recul lentes, et en ce que, dans le cas où le rapport ($M_{p1}$) entre les impulsions de consigne de l'axe guidé et de l'axe de guidage est supérieur à 1, la cadence de l'axe de guidage est appliquée au composant (5) pour l'établissement d'une cadence d'avance et d'une cadence de recul lentes tandis que la cadence de l'axe guidé est appliquée au composant (4) pour l'établissement d'une cadence d'avance et d'une cadence de recul rapides, et en ce que cette commutation est produite par un signal de commande (14).

4. Dispositif selon la revendication 3, caractérisé en ce qu'il est prévu dans les composants (4, 5) des bascules monostables pour la division des signaux de cadences biphasées convertis d'entrée en cadences d'avance ($V_s$, $V_1$) et en cadences de recul ($R_s$, $R_1$).

5. Dispositif selon la revendication 4, caractérisé en ce que les cadences lentes ($V_1$, $R_1$) sont appliquées directement à un composant (8) en vue d'une commutation de cadences entre l'état de guidage et l'état guidé et en ce que les cadences rapides ($V_s$, $R_s$) sont appliquées, avec interposition d'un diviseur programmable correspondant (6, 7), au composant (8).

6. Dispositif selon la revendication 5, caractérisé en ce que, par l'intermédiaire de conducteurs de commande (15), des liaisons sont établies rapidement avec un verrou d'impulsions et lentement avec un verrou d'impulsions pour supprimer les cadences rapides ($V_s$, $R_s$) ou les cadences lentes ($V_1$, $R_1$).

7. Dispositif selon une des revendications 5 ou 6, caractérisé en ce que les diviseurs programmables (6, 7) sont constitués par des composants numériques branchés en cascade et en ce qu'un multiplicateur d'impulsions (17, $M_p$) est relié au diviseur programmable (6, 7).

8. Dispositif selon une des revendications 5 à 7, caractérisé en ce que le composant (8) coopère, en vue d'une commutation de cadences entre l'état de guidage et l'état guidé, avec un sélecteur de données qui est activé par le signal de commande (14) en vue d'une commutation entre l'état rapide et l'état lent, de telle sorte que les cadences ($V_{sM}$, $R_{sM}$) provenant de la sortie des diviseurs programmables (6, 7) et les cadences ($V_1$, $R_1$) provenant de la sortie du composant (5) soient commutées de telle sorte que les cadences de l'axe de guidage apparaissent aux sorties ($V_f$, $R_f$) du composant (8) tandis que les cadences de l'axe guidé apparaissent aux sorties ($V_g$, $R_g$) du composant (8).

9. Dispositif selon la revendication 8, caractérisé en ce que les sorties ($V_f$, $R_f$) sont reliées avec un composant (10) en vue d'une désynchronisation et d'une génération d'impulsions pour l'état de guidage tandis que les sorties ($V_g$, $R_g$) sont reliées avec un composant (11) en vue d'une désynchronisation et d'une génération d'impulsions pour l'état guidé, les composants (10, 11) comportant des bascules-D déclenchées par flancs, qui sont activées par des cadences déphasées ($T_1$, $T_2$) d'un composant (9) en vue d'une génération de cadences.

10. Dispositif selon la revendication 9, caractérisé en ce que les composants (10, 11) servant à une désynchronisation sont reliés à un autre composant (12) servant à une commutation de cadences et qui est lui-même relié au multiplicateur d'impulsions de signe (19, VZ).

11. Dispositif selon une des revendications précédentes, caractérisé en ce que les résultats de comptage peuvent être appliqués à un régulateur numérique de position (27), qui produit pour sa part des valeurs de consigne de vitesse de rotation selon y ($n_{soll\ y}$), en ce que ces valeurs de consigne de vitesse de rotation selon y peuvent être appliquées par l'intermédiaire d'un convertisseur numérique/analogique (26) à un régulateur analogique de vitesse de rotation selon y (24), et en ce que les valeurs de consigne de vitesse de rotation selon x ($n_{soll\ x}$) de l'axe de guidage sont appliquées directement à un régulateur analogique de vitesse de rotation selon x (25) de l'axe de guidage de telle sorte que les valeurs de consigne de vitesse de rotation selon x ($n_{soll\ x}$) déterminent les vitesses de rotation des deux entraînements à courant continu (M).

12. Dispositif selon la revendication 1, caractérisé en ce que, pour une régulation linéaire de déplacement d'un axe en relation avec un à trois axes, il est prévu pour chaque axe des capteurs incrémentaux de valeurs réelles de distances, qui fournissent des cadences biphasées ($A_1$, $B_1$, $A_2$, $B_2$, $A_3$, $B_3$, $A_4$, $B_4$), qui sont converties numériquement au moyen de registres à décalage et d'une logique additionnelle dans des composants (35 à 38), en ce que les cadences converties sont divisées à l'aide de composants (39 à 42), placés à la suite, en cadences d'avance ($V_1$ à $V_4$) et en cadences de recul ($R_1$ à $R_4$) et sont appliquées à des diviseurs programmables (43 à 46 et 47 à 50) et sont multipliées avec des multiplicateurs d'impulsions ($M_{p1}$ à $M_{p4}$), en ce que les cadences divisées ainsi établies ($V_{M1}$ à $V_{M4}$ et $R_{M1}$ à $R_{M4}$) soient appliquées à un composant respectif (51 à 54) en vue d'une commutation de signes et en ce que les impulsions d'avance ($V_{A1}$ à $V_{A4}$) et les impulsions de recul ($R_{A1}$ à $R_{A4}$) soient appliquées à un dispositif commun (34) pour une formation de sommes ou pour une formation de différence de régulation.

13. Dispositif selon la revendication 12, caractérisé en ce que le dispositif (34) comporte un composant (55) pour produire une désynchronisation et une génération d'impulsions, ce dispositif analysant les cadences d'entrée (impulsions) ($V_{A1}$ à $V_{A4}$ ou $R_{A1}$ à $R_{A4}$) par des cadences déphasées ($T_0$ à $T_7$) et les combinant sous forme d'une cadence d'avance (V) et d'une cadence de recul (R), qui sont appliquées de leur côté à un compteur progressif-régressif (59), en ce que le compteur (59) coopère avec un composant (58) en vue d'effectuer une addition de décalage ainsi qu'avec un composant (56) en vue d'une génération de cadences, et en ce que la différence de régulation ($x_{d1}$) obtenue dans le compteur (59) est appliquée à un régulateur numérique de position.

FIG.1

EP 0 112 936 B1

FIG.2

FIG.3

EP 0 112 936 B1

FIG.4